# EUROPEAN PATENT APPLICATION

(11) **EP 0 924 063 A1**
(43) Date of publication of application: **23.06.1999**
(21) Application number: 98204329.1
(22) Date of filing: 17.12.1998
(51) Int. Cl.: B32B 27/34, C08L 73/00, F16L 9/133, F16L 9/12, B32B 27/08, C08G 67/02

(54) **Thermoplastic laminate comprising a linear alternating polymer of carbon monoxide and ethylenically unsaturated compounds**

(30) Priority: 18.12.1997 US 68088 P
(71) Applicant: SHELL INTERNATIONALE RESEARCH MAATSCHAPPIJ B.V., 2596 HR Den Haag (NL)
(72) Inventor: Ash, Carlton Edwin, Sugar Land, Texas 77479 (US); Danforth, Richard Louis, Missouri City, Texas 77459 (US); Waters, Dixie Green, Houston, Texas 77055 (US)

(57) **Abstract**

A multilayer polymer structure which includes
- a polyketone polymer layer which comprises at least a polyketone polymer,
- a tielayer which comprises at least a polyamide copolymer or a polyamide monomer, and
- a polyamide layer which comprises at least a polyamide having a lengthy aliphatic chain segment, wherein said polyketone layer is bonded to said tielayer and said tielayer is bonded to said polyamide layer; and a process for producing the multilayer polymer structure.

## Description

This invention relates to multilayer polymer structures comprising at least one layer of an alternating aliphatic polyketone and at least one layer of a polyamide having lengthy aliphatic chain segments, and to a process for producing the multilayer polymer structures.

Polymers of carbon monoxide and ethylenically unsaturated hydrocarbons commonly referred to as alternating aliphatic polyketones (hereafter, "polyketones" or "polyketone polymers") are now well known. Alternating aliphatic polyketones polymers are of considerable interest because they exhibit a good overall set of physical and chemical properties. The tribological and barrier properties of these materials are particularly noteworthy. This class of polymers is disclosed in numerous patent documents, exemplified by US-A-4880903 and US-A-4880904.

No single polymer is known to possess properties that are optimal or even desirable for all possible polymer applications. Various strategies are used to enhance the properties of polymers which may be useful in some respects and less desirable in others. One such approach is the formulation of polymer blends. Blending usually results in a material that has an overall property set that is the average of the materials blended. Another strategy is to enhance a polymer's properties through the addition of certain additives. For example, certain stiff polymers may be made flexible by the addition of placticizers. Another strategy that can be used is the formation of a multilayer structure or composite using two or more layers of different polymers. This is frequently seen in multilayer packaging applications where, for example, one polymer layer may provide the necessary chemical and barrier characteristics, while benefiting from the lower cost and desired mechanical properties of another.

It would be useful to form multilayer structures from the combination of one or more layers of polyamide-12 together with one or more layers of polyketones. Polyamide-12 finds considerable commercial utility in applications such as industrial hoses, pipes, liners and automotive fuel lines. The barrier properties of monolithic polyamide-12 structures to materials such as fuels, however, could be substantially improved. This could be affected by preparing the tubing as a multilayer structure of polyamide-12 and polyketone. Unfortunately, polyamide-12 and polyketone polymers are generally considered to be insufficiently compatible or adhesive. That is, polyamide-12 will not readily adhere to polyketones after melt processing. Other polyamides of immediate interest which are also generally insufficiently compatible with polyketones include polyamide-6, polyamide-11, and polyamide-6,12.

Compatibilization of the polymer/polymer interface is a critical issue in the formation of multilayer structures. Weak interfacial bonding between the layers can result in delamination and poor overall mechanical properties. This can be overcome through the use of a tielayer between layers to be formed into the multilayer structure. Such a tielayer must be compatible or adhesive with the polymers it will join together. Another requirement of the tielayer is that it must be processible under the conditions in which the materials to be joined will be processed. Thermal degradation or crosslinking of the tielayer when exposed to the high processing heat and conditions generally required of polyketone polymers would be counterproductive in most cases. These requirements and others make it difficult to predict which materials might be useful as tielayers for any given set of polymers and make it difficult to engineer useful tielayers and multilayer structures.

US-A-5369170 proposes a multilayer structure comprising an aminated modified polyolefin and a polyketone. The modified polyolefin can be made by reacting a modified polyolefin such as a maleic anhydride grafted polypropylene with an amine such as a diamine. The method of forming a polyketone/polyolefin layer does not address polyamides.

US-A-5232786 proposes a co-extruded multilayer structure of polyketone and another layer of a cracked polybutylene or polyamide-6, polyamide-12, a copoly-etherester or a poly(vinyl chloride). The multilayer structures do not use a tielayer and can consequently be readily separated when the integrity of a layer is stressed or impaired (e.g. by inducing a kink).

US-A-5300338 proposes a co-extruded laminate of polyketone and polyvinylidene fluoride, polyamide-6,6 or phenoxy resin. The patent describes at least three different types of adhesion among various bilayer structures. The strongest adhesion was designated "interactive adhesion" and described an adhesion in which the layers could be separated only by destroying one or both of them. The weakest adhesion was designated as a "mechanical bond" in which a composition could be delaminated once the integrity of either layer was impaired. An intermediate level of adhesion was described as a "strong resistance to peel". A bilayer tubing was prepared comprising a polyketone layer and a layer of polyamide-6,6/polyamide-12 blend. The tubing displayed an intermediate level of adhesion and was not part of the inventive composition (it was prepared for comparative purposes).

None of the compositions and applications described above teach how one might effectively bond polyketone polymers with polyamides having lengthy aliphatic chain segments (e.g. polyamide-12). Improvements in polyketone/polyamide multilayer structures would be beneficial in a number of applications. This could be most directly affected through the use of tielayers which increase the adhesion between the polymer layers.

The invention relates to a multilayer polymer structure which includes
- a polyketone polymer layer which comprises at least a polyketone polymer,
- a tielayer which comprises at least a polyamide copolymer or a polyamide monomer, and
- a polyamide layer which comprises at least a polyamide having a lengthy aliphatic chain segment, wherein said polyketone layer is bonded to said tielayer and said tielayer is bonded to said polyamide layer.

The invention relates also to a process for producing a multilayer polymer structure which includes adhering a polyketone polymer layer which comprises at least a polyketone polymer to a polyamide layer which comprises at least a polyamide having a lengthy aliphatic chain segment by contacting both of said layers to an intermediate tielayer which comprises at least a polyamide copolymer or a polyamide monomer.

The invention relates also to the use of a polyamide monomer as an adhesion promoter for adhering a polyketone polymer layer which comprises at least a polyketone polymer to a polyamide layer which comprises at least a polyamide having a lengthy aliphatic chain segment.

The polyketone polymers which are employed in this invention are of a linear alternating structure and contain substantially one unit originating from carbon monoxide for each unit originating from ethylenically unsaturated hydrocarbon. The portions of the polymer attributable to carbon monoxide alternate with those attributable to the ethylenically unsaturated hydrocarbon.

It is possible to employ a number of different ethylenically unsaturated hydrocarbons as monomers within the same polyketone polymer. The preferred polyketone polymers are copolymers of carbon monoxide and ethylene or terpolymers of carbon monoxide, ethylene and a second ethylenically unsaturated hydrocarbon of at least 3 carbon atoms, particularly an a-olefin such as propene. Additional monomers can also be used and still come within the scope of polyketone polymers described herein. That is, polyketone polymers can be made from four, five or more combinations of monomers. Such polyketone polymers are aliphatic in that there is an absence of aromatic groups along the polymer backbone. However, alternating polyketones may have aromatic groups substituted or added to side chains and yet still be considered alternating aliphatic polyketones. Moreover, the polyketones used in this invention can be blends with any number of other polymers and materials. Some blends could incorporate aromatic materials and polymers. Nevertheless, the polyketone polymer component is still considered to be of the alternating aliphatic type.

When preferred polyketone polymers are employed, there will be within the terpolymer at least 2 units incorporating a moiety of ethylene for each unit incorporating a moiety of the second or subsequent hydrocarbon, if any is present. Preferably, there will be from 10 units to 100 units incorporating a moiety of a further hydrocarbon. The polymer chain of the preferred polyketone polymers is therefore represented by the repeating formula

⁅CO(̵CH₂-CH₂)̵]ₓ⁅CO(̵G)̵]_{y}-

where G is the moiety of ethylenically unsaturated hydrocarbon of at least three carbon atoms polymerized through the ethylenic unsaturation and the ratio of y:x is no more than 0.5, preferred ratios of y:x being from 0.01 to 0.1. The -CO(̵CH₂-CH₂)̵ units and the -CO(̵G)- units, if any is present, are found randomly throughout the polymer chain. When copolymers of carbon monoxide and ethylene are employed in the compositions of the invention, there will be no second hydrocarbon present and the copolymers are represented by the above formula wherein y is zero. The precise nature of the end groups does not appear to influence the properties of the polymer to any considerable extent so that the polymers are fairly represented by the formula for the polymer chains as depicted above.

Of particular interest are the polyketone polymers of number average molecular weight from 1000 to 200,000, particularly those of number average molecular weight from 20,000 to 90,000 as determined by gel permeation chromatography. Typical melting points for the polymers are from 175 °C to 300 °C, more typically from 210 °C to 270 °C. The polymers have a limiting viscosity number (LVN), measured in m-cresol at 60 °C in a standard capillary viscosity measuring device, of from 0.5 dl/g to 10 dl/g, more frequently of from 0.8 dl/g to 4 dl/g. The backbone chemistry of aliphatic polyketones precludes chain scission by hydrolysis. As a result, they generally exhibit long term maintenance of their property set in a wide variety of environments.

Methods for the production of the polyketone polymers are illustrated by US-A-4808699 and US-A-4868282. US-A-4808699 teaches the production of alternating polymers by contacting ethylene and carbon monoxide in the presence of a catalyst comprising a Group VIII metal compound, an anion of a nonhydrohalgenic acid with a pKa less than 6 and a bidentate phosphorous, arsenic or antimony ligand. US-A-4868282 teaches the production of terpolymers by contacting carbon monoxide and ethylene in the presence of one or more hydrocarbons having an olefinically unsaturated group with a similar catalyst.

The polyamides which are used as the polyamide layer to which the polyketone layers are adhered are polyamides having lengthy aliphatic chain segments. A polyamide with a long aliphatic chain segment is a polyamide in which the backbone, or a substantial portion thereof, is comprised of 9 or more carbon atoms between amide groups, in particular up to 12 carbon atoms. These polymers include, without limitation, polyamide-11, polyamide-12 and polyamide-11,12. Polyamide-11, polyamide-12 and polyamide-6,12 are preferred. Polyamide-12 is most preferred.

Throughout this specification, polyamides are referred to as "polyamide-X" where X is a number or numbers according to the standard manner of characterizing polyamide repeat units. When the monomers used to form the polyamides are amino acids or lactams, the polyamide is referred to as an AB-type polyamide where A is the amine group and B is the carbonyl group of an amide bond. When AB-type polyamides are referred to, X is a single number designating the number of carbon atoms separating the nitrogen from the carbonyl group. Thus, polyamide-6 and polyamide-12 are AB-type polyamides. When the monomers used to form the polyamide comprise diamines and dibasic acids, AABB-type polyamides are formed. Two numbers are used to designate X in this case; the first is the number of carbon atoms in the diamine monomer unit and the second is the number of carbon atoms in the dibasic acid monomer unit. Thus, polyamide-6,6 is an AABB-type polyamide.

The materials useful as the tielayer may include polyamide copolymers, particularly those having some residual monomer present. In this context, by residual monomer it is meant that the bulk material used as the tielayer has, either grafted or appended thereto, or associated or bonded via physical or chemical means, nitrogenous monomer (or relatively nonpolymerized derivitives of the monomer) from which one or more of the polyamides which form the copolymers are made. Lactams, acid/diamine combinations, and amino acids ordinarily used in the polymerization of commercial polyamides are useful in this regard. Some examples include ε-caprolactam, β-caprolactam, ω-enantholactam, capryllactam, adipic acid/hexamethylenediamine, adipic acid/tetramethylene diamine, ω-dodecanolactam and ω-aminoundecanoic acid. The lactams are the preferred residual monomers with caprolactams (in particular, ε-caprolactam) being most preferred. One skilled in the art will readily appreciate that other materials exhibiting chemical behavior similar to the lactams can be useful in an equivalent manner.

It is preferred that the residual monomer comprise between 0.01 and 10 %wt based on the total weight of the bulk polyamide copolymer used as the tie-layer. It is more preferred that between 1 and 5 %wt (same basis) be used. It is most preferred that the residual monomer comprise about 2.5 %wt of the bulk material used as the tie-layer.

The polyamide copolymer of the tielayer is in particular a copolymer which includes copolymerised units (sometimes also named portions or segments) of
- a polyamide having a short aliphatic chain segment,
- an AABB-type polyamide, and
- a polyamide having a lengthy aliphatic chain segment.
Further or additional polyamide units may also be present, but a terpolymer of only these particular units is preferred. A polyamide with a short aliphatic chain segment is a polyamide with less than 9 carbon atoms in the polymer backbone between amide groups, in particular down to 4 carbon atoms, more in particular down to 6 carbon atoms, for example polyamide-6. The AABB-type polyamides may have from 4 to 12 carbon atoms in the polymer backbone between amide groups, in particular from 6 to 10 carbon atoms. Examples of the AABB-type polyamides include polyamide-6,6, polyamide-6,9 and polyamide-6,10. Polyamides with long aliphatic chain segments, in this context, are those polyamides having the same characteristics as described above (i.e., 9 or more carbon atoms in the polymer backbone between amide groups, in particular up to 12 carbon atoms). Polyamide-11 and polyamide-12 are preferred. It is further preferred that the polyamide with a short chain segment and the polyamide with a long aliphatic chain segment are both AB-type polyamides. It also preferred that the copolymeric tielayer is a random copolymer of the polyamides described. However, block copolymers and alternating copolymers can be useful as well.

The most preferred tielayers materials are copolymers of polyamide-6, polyamide-6,6 and polyamide-12 units having some residual monomer present in the bulk material. These copolymers have preferably between 40 and 60 %mole polyamide-6, between 15 and 35 %mole polyamide-6,6 and between 15 and 35 %mole polyamide-12. It is most preferred that the tielayer is a random copolymer comprised of 45-55 %mole polyamide-6, 20-30 %mole polyamide-6,6 and 20-30 %mole polyamide-12, and containing between 1 and 5 %wt, more particular between 1 and 3 %wt (based on total weight of bulk copolymer) of residual monomer. Such materials include, for example, "H 30" PLATAMID (trademark), commercially available from Elf Atochem.

The preparation of such polyamide copolymers is known. However, if necessary, reference may be found in US-A-1995291, US-A-2012267, US-A-2130,948 and many others, as well as in Don E. Floyd, "Polyamide Resins" (Reinhold Publishing Corp., 1966) and Melvin I. Kohan (Ed.), "Nylon Plastics" (John Wiley & Sons, 1979). The preparation of the polyamide copolymers generally involves conventional condensation polymerization requiring only that the desired monomers, such as diamines, diacids, aminoacids and lactams, be added to a polymerization vessel sometime during polymerization, provided that the necessary balance of amine and acid group is maintained. It is also possible that a polyamide be transamidized with additional monomer(s) or other polyamide. Residual monomers may be present in the polymer by limiting the polymerization conditions such as time and temperature, providing additional monomer near the end of the polymerization, or by adding monomer directly to the finished polymer such as in a melt compounding step.

The polyamide polymers and copolymers as used in this invention can be of any molecular weight as considered convenient. Typically the number-average molecular weights are in the range of from 5000 to 50,000, more typically they are in the range of from 10,000 to 35,000. The amide bonds within the polymer chains of the polyamide polymers and copolymers may or may not be substituted by small alkyl groups, e.g. methyl or ethyl groups. However there is a preference for using polyamide polymers and copolymers of which the amide groups consist of groups -CO-NH-. The aliphatic chain segments are generally of a linear structure, although there is nothing precluding the use of a polyamide polymer or copolymer having (in part) e.g. branched aliphatic chain segments.

In another embodiment of this invention, a mutilayer structure is formed by the use of polyamide monomer as an adhesive agent or promoter, typically coated on or compounded in polyamide to generate a tielayer for adhering polyketone to a polyamide with a long aliphatic chain segment. Such polyamide monomers are the same as those set forth above such as lactams and diamines. Quantities of such monomers useful as tielayer range between 0.1 and 20 %wt (based on the total weight of polyamide) added to a polyamide with long aliphatic chain segments. A mixture of polyamide monomers can also be used effectively in this capacity.

Multilayer structures are formed by combining at least one polyketone layer and at least one polyamide layer with a tielayer between them, generally at temperatures above the melting point of both the polyketone and the polyamide to which it is adhered. This is best accomplished by co-extrusion using well known methods. Generally, this involves extruding the polymers separately and combining them just upstream of the die or within the die used to form the product to be made (e.g. tubing, sheet, film). When the copolymeric tielayer described above is used as the tielayer and polyamide-12 is the material to which polyketone is adhered, temperatures must generally be maintained above the polymers' melting point which will be between about 100 °C and 280 °C throughout the process. For example, the polyketone polymer may be extruded at 220-290 °C, the polyamide copolymer tielayer may be extruded at temperatures of about 150-190 °C (or, in some cases even higher), and the polyamide of long aliphatic chain segments may be extruded at 170-230 °C. The polymer melts are brought together in a multilayer manifold prior to exiting the die. Here the temperature is generally equivalent to the highest of the extruder temperatures. The total residence times can vary from less than one minute to tens of minutes. In making multilayer structures the utilization of polymers with similar melt viscosities or rheologies is preferred. Substantially different viscosities may result in inconsistent flow and non-uniform layer thicknesses. The combinations of materials described above achieve this objective. Those skilled in the art will recognize that many variations of the conditions for this process are possible and that such variations are within the scope of ordinary skill.

Indeed, the multilayer structure of this invention can be made according to any of the processes that are generally useful for adhering different polymeric materials together. In another embodiment of the process of this invention, a polyketone layer and a layers of the polyamide of long aliphatic chain segments, e.g. polyamide-12, are formed and adhered together by compression moulding with a tielayer placed between the two layers. For example, the polyketone polymer, the tielayer and the polyamide-12 can be readily moulded into 0.3 mm thick sheets at 240-250 °C, 190-200 °C and 190-200 °C, respectively. The layers are than stacked and the resulting polyketone/tielayer/polyamide-12 three-layer stack is then compression moulded, e.g. inside a 0.6 mm thick frame, using a temperature of about 240 °C to produce a multilayer structure.

The thickness of the polyketone polymer layer and the thickness of the polyamide layer will depend on the specific requirements related to the application of the multilayer structure. For example the thickness may range from 5-5000 µm, e.g. in a film or sheet application, to 0.1-100 mm in other applications, such as in tubing or in pipe applications. The thickness of the intermediate layer will frequently range from 5-1000 µm.

Multilayer structures comprising any number of layers can be made in the manner described above. Examples include three layer systems of polyketone/tie-layer/polyamide-12 and five layer systems such as polyolefin/tie-layer/polyketone/tie-layer/polyamide-12. In the case of the five layer system, the tielayer used to adhere the polyolefin to the polyketone can comprise the amine modified polyolefin as described in US-A-5369170, while the tielayer used to adhere the polyketone to the polyamide-12 comprises the tielayer described in this specification.

The multilayer structures of this invention are useful for tubing applications such as as industrial hose, pipes and liners, and automotive fuel lines.

The invention is further described in the following examples.

### Example 1 (Polyketone formation)

A terpolymer of carbon monoxide, ethene and propene was produced in the presence of a catalyst composition formed from palladium acetate, the anion of trifluoroacetic acid and 1,3-bis(diphenylphosphino)propane. The melting point of the linear terpolymer was 220 °C and it had a limiting viscosity number (LVN) of 1.75 measured at 60 °C in m-cresol.

### Examples 2-5 (Co-extrusion with a tielayer)

Various combinations of polyamides were co-extruded into tubings with the polyketone of Example 1 as innerlayer of the tubings and with and without tielayer. The outerlayers of the tubings were polyamide-12 commercially available from Hüls and sold as "VESTAMID" (trademark) polyamide-12. In examples 2 and 5, the polyamide-12 was an unplasticized composition sold under the trademark "VESTAMID L2101F". In examples 3 and 4, the polyamide-12 was a plasticized composition sold under the tradename "VESTAMID L2124". The polyketone comprised the inner layer of the tube.

The tielayers tested were in Examples 2 and 3 a "H-30" PLATAMID (trademark) polyamide copolymer, in Example 4 a 50:50 wt polyamide-12/polyamide-6,6 blend of "VESTAMID L2124" polyamide-12 from Hüls and "ZYTEL 101" (trademark) polyamide-6,6 from DuPont, and in Example 5 the "VESTAMID L2124" polyamide-12. The "H-30" PLATAMID polyamide copolymer had a melting point of about 150 °C, and comprised of a copolymer of copolymerised units of polyamide-6 (50 %mole), polyamide-6,6 (25 %mole) and polyamide-12 (25 %mole), and contained 2.5%wt residual ε-caprolactam. The polyamide-12/polyamide-6,6 blend was prepared on a 25 mm twin screw extruder at a melt temperature of between 275-285 °C.

The co-extrusion was conducted using three single screw extruders (2 x 38 mm extruders and a 0.25 mm extruder) and a multilayer manifold and tubing die supplied. A tubing of nominal outer diameter of 7.5-8.0 mm was produced with layer thicknesses of the polyketone polymer layer and the polyamide-12 layer as indicated in the Table below. The thickness of the tielayer was about 0.03 mm.

The polyketone was processed at a melt temperature between 250 °C and 255 °C. The polyamide-12 was processed at a melt temperature between 205 °C and 210 °C. The tielayer was processed at a melt temperature between 185 °C and 190 °C for the "PLATAMID H30" brand polyamide copolymer, and 270-280 °C for the polyamide-12/polyamide-6,6 blend.

A T-peel test was then conducted on the co-extruded tubings. In this test, the tubing was sliced open longitudinally. The two main layers were separated slightly on one end by hand to produce two end tabs capable of being placed in an tensile tester. An Instron Model 1123 tensile tester was then used to determine the stress necessary to completely separate the layers at 90° to one another. The test was carried out with a crosshead speed of 127 mm/min. The T-peel adhesion is reported in units of force per unit width of the specimen. Five different samples were pulled for each type of tubing made and the average result was then computed for each type. Results are provided in the Table.

| Example | Middle layer (Tielayer) | Average peel strength (N/mm) | Average polyamide/polyketone thickness (mm) |
|---|---|---|---|
| 2 | Polyamide copolymer ¹ | 8.89 | 0.36/0.45 |
| 3 | Polyamide copolymer ¹ | 4.24 | 0.32/0.44 |
| 4² | Polyamide-12/polyamide-6,6 blend ³ | 1.52 | 0.39/0.35 |
| 5² | Polyamide-12 | 0.91 | 0.49/0.36 |

| | | | |
|---|---|---|---|
| Notes: 1. "H-30" PLATAMID polyamide copolymer | | | |
| 2. Not according to the invention | | | |
| 3. 50/50 by weight blend | | | |

The examples show that use of the tielayers of this invention improves adhesion by more than an order of magnitude beyond the adhesion obtained in polyketone/-polyamides when there is no tielayer according to this invention. This degree of adhesion was unexpected given that it was known that polyamide-6 and polyamide-12 adhere rather poorly to polyketone.

### Example 6 (Compression moulding with monomeric adhesion promoter)

A 0.38 mm (15 mil) thick, 80 x 80 mm plaque was made by compression moulding the polyketone of Example 1 at 240 °C. A plaque of the same dimensions was produced by compression moulding "VESTAMID L2124" polyamide-12 at 195 °C. 0.5 grams of ε-caprolactam was evenly spread on the polyamide-12 sheet. The polyketone sheet was then placed on the polyamide-12 sheet and the stack was compression moulded at 240°C using a 90 sec hold time and 5000 psi pressure (350 bar) inside a 0.76 mm (30 mil) thick mould. An attempt was made to conduct a T-Peel test using 25 mm wide strips cut from the placque but the adhesion was so strong that tabs could not be initiated for a pull.

This example shows the efficacy of polyamide monomer as an adhesion promoter.

### Example 7 (Comparative: compression moulding without monomeric adhesion promoter)

Example 6 was repeated except that no ε-caprolactam was used. Test strips 25 mm wide were cut and then slightly separated on one end. The separated tabs were placed in a Instron Model 1123 tensile tester. T-peel tests were then conducted using a crosshead speed of 127 mm/min. The sheets could easily be separated by hand and showed T-peel adhesion of 1.12 N/mm.

## Claims

1. A multilayer polymer structure which includes
- a polyketone polymer layer which comprises at least a polyketone polymer,
- a tielayer which comprises at least a polyamide copolymer or a polyamide monomer, and
- a polyamide layer which comprises at least a polyamide having a lengthy aliphatic chain segment, wherein said polyketone layer is bonded to said tielayer and said tielayer is bonded to said polyamide layer.

2. The structure of claim 1 wherein the intermediate tielayer comprises a polyamide copolymer of copolymerised units of
- a polyamide having a short aliphatic chain segment,
- an AABB-type polyamide, and
- a polyamide having a lengthy aliphatic chain segment.

3. The structure of claim 2 wherein the intermediate tielayer comprises a polyamide copolymer of copolymerised units of polyamide-6, polyamide-6,6 and polyamide-12.

4. The structure of claim 3 wherein the intermediate tielayer comprises a polyamide copolymer of copolymerised units of 40 to 60% mole polyamide-6, 15 to 35% mole polyamide-6,6 and 15 to 35% mole polyamide-12.

5. The structure of any one of claims 1-4 wherein said tielayer comprising a polyamide copolymer which comprises residual polyamide monomer in a quantity of 1 to 5 %wt, based on the total weight of the tielayer.

6. The structure of any one of claims 1-5 wherein the polyketone polymer is an alternating polymer of carbon monoxide and an ethylenically unsaturated hydrocarbon which is represented by the repeating formula
⁅CO(̵CH₂-CH₂)̵]ₓ⁅CO(̵G)̵]_{y}-
where G is the moiety of an ethylenically unsaturated hydrocarbon of at least three carbon atoms polymerized through the ethylenic unsaturation, the ratio of y:x is no more than 0.5, in particular ratios of y:x being from 0.01 to 0.1, and in which polyketone polymer the -CO(̵CH₂-CH₂)̵ units and the -CO(̵G)- units, if any, are found randomly throughout the polymer chain.

7. The structure of any one of claims 1-6 wherein the polyamide of the polyamide layer is selected from the group consisting of polyamide-11, polyamide-12, polyamide-11,12, polyamide-6,12 and polyamide-12,12, in particular polyamide-12.

8. The structure of any one of claims 1-7 wherein the polyamide monomer is selected from the group consisting of lactams, amine/carboxylic acid combinations, and combinations of lactams and amine/carboxylic acid combinations.

9. The process of claim 8 wherein the polyamide monomer comprises a caprolactam.

10. A process for producing a multilayer polymer structure which includes adhering a polyketone polymer layer which comprises at least a polyketone polymer to a polyamide layer which comprises at least a polyamide having a lengthy aliphatic chain segment, by contacting both of said layers to an intermediate tielayer which comprises at least a polyamide copolymer or a polyamide monomer.

11. The process of claim 10 wherein said contacting step is conducted by co-extrusion or by compression moulding.

12. The use of a polyamide monomer as an adhesion promoter for adhering a polyketone polymer layer which comprises at least a polyketone polymer to a polyamide layer which comprises at least a polyamide having a lengthy aliphatic chain segment.
